Europäisches Patentamt

European Patent Office

Office européen des brevets

(19)

(11) Veröffentlichungsnummer: **0 186 791**
**B1**

# (12) EUROPÄISCHE PATENTSCHRIFT

(45) Veröffentlichungstag der Patentschrift:
01.06.88

(51) Int. Cl.⁴: **B 60 S 1/08**

(21) Anmeldenummer: **85115173.8**

(22) Anmeldetag: **29.11.85**

(54) **Scheibenwischanlage, insbesondere für Kraftfahrzeuge.**

(30) Priorität: **21.12.84 DE 3446761**

(43) Veröffentlichungstag der Anmeldung:
**09.07.86 Patentblatt 86/28**

(45) Bekanntmachung des Hinweises auf die Patenterteilung:
**01.06.88 Patentblatt 88/22**

(84) Benannte Vertragsstaaten:
**FR GB IT**

(56) Entgegenhaltungen:
**DE - A - 2 900 165**
**DE - A - 3 135 996**

(73) Patentinhaber: **SWF Auto-Electric GmbH, Stuttgarter Strasse 119 Postfach 135, D-7120 Bietigheim-Bissingen (DE)**

(72) Erfinder: **Bauer, Kurt, Wolfsgrubenstrasse 21, D-7121 Ingersheim 2 (DE)**
Erfinder: **Schneider, Theodor, Seestrasse 30, D-7121 Freudental (DE)**

ACTORUM AG

## Beschreibung

Die Erfindung geht aus von einer Scheibenwischanlage, die insbesondere für Kraftfahrzeuge verwendet wird und die Merkmale aus dem Oberbegriff des Anspruchs 1 aufweist. (Siehe, z.B, die DE-A-3 135 996).

Es sind bereits Wischanlagen für Kraftfahrzeuge bekannt bei denen der Wischer im normalen Wischbetrieb zwischen zwei Umkehrstellungen innerhalb eines Wischfeldes pendelt und, wenn die Wischanlage mit Hilfe eines Betriebsschalters ausgeschaltet wurde, in einer sogenannten versenkten Parkstellung ausserhalb des Wischfeldes abgelegt wird. Dabei läuft der Elektromotor beim Einschalten der Wischanlage und während des normalen Dauer- und Intervall-wischbetriebs in der einen Drehrichtung. Wird dann der Betriebsschalter ausgeschaltet, so wird aus der Umschaltung des Positionsschalters während des Rücklaufs ein Signal zum Umpolen des Elektromotors gewonnen. Bei dem nachfolgenden Wischzyklus mit geänderter Drehrichtung des Motors, wird ein Exzenter in dem Kurbeltrieb zwischen dem Elektromotor und dem Wischer derart verändert, dass sich der Wischwinkel vergrössert und damit der Wischer in die ausserhalb des Sichtfeldes des Fahrers befindliche versenkte Parkstellung einläuft. Dort wird der Positionsschalter im selben Sinne wie vorher umgeschaltet und dadurch der Elektromotor stillgesetzt. Der Wischer ist also in der versenkten Parkstellung abgelegt.

Im Intervallwischbetrieb dreht der Elektromotor in derselben Richtung wie im Dauerwischbetrieb. In der Pausenzeit zwischen zwei Wischzyklen soll der Wischer nicht in die versenkte Parkstellung gebracht werden. Es hat sich nun herausgestellt, dass der Wischer in der Pausenzeit auch nicht in der der Parkstellung benachbarten Umkehrstellung, sondern weit im Wischfeld abgelegt ist. Ausserdem wurde bemerkt, dass am Ende des Dauerwischbetriebs der Elektromotor vor dem letzten Wischzyklus mit umgekehrter Drehrichtung nicht in der der Parkstellung benachbarten Umkehrstellung, sondern meist innerhalb des normalen Wischfeldes umgepolt wird. Dadurch erreicht der Wischer im Intervallbetrieb nie die der Parkstellung benachbarte Umkehrstellung. Auch im letzten, mit normaler Drehrichtung gefahrenen Wischzyklus des Dauerbetriebs wird die der Parkstellung benachbarte Umkehrstellung nicht erreicht. In beiden Fällen ist die Reinigung der Scheibe eines Kraftfahrzeugs ungenügend. Auch wird, vor allem im Intervallwischbetrieb durch den während der Pausenzeit im normalen Wischfeld ruhenden Wischer, die Sicht für die Fahrzeuginsassen eingeschränkt.

Der Erfindung liegt deshalb die Aufgabe zugrunde, eine Scheibenwischanlage, die die Merkmale aus dem Oberbegriff des Anspruchs 1 aufweist, so weiterzuentwickeln, dass gewährleistet ist, dass in jedem Wischzyklus das gesamte zwischen den beiden Umkehrstellungen des normalen Dauerwischbetriebs liegende Wischfeld gewischt wird.

Diese Aufgabe wird erfindungsgemäss dadurch gelöst, dass bei einer Scheibenwischanlage mit den Merkmalen aus dem Oberbegriff des Anspruchs 1 der Positionsschalter unabhängig von der Drehrichtung des Elektromotors jeweils in derselben Position des Antriebsteils umschaltbar ist.

Der Erfindung liegt die Erkenntnis zugrunde, dass die nicht den Anforderungen genügende Funktionsweise der Scheibenwischanlage nach dem Oberbegriff des Anspruchs 1 nicht durch irgendwelche Eigenheiten in der Mechanik des Exzenters und des gesamten Kurbeltriebs, sondern dadurch bedingt ist, dass der Positionsschalter je nach Drehrichtung des Elektromotors und damit des rundlaufenden Antriebsteils in unterschiedlichen Positionen dieses Teils umgeschaltet wird. Wird der Zeitpunkt der Umschaltung so gelegt, dass in der einen Drehrichtung des Elektromotors die gewünschte versenkte Parkstellung erreicht wurde, so wird der Positionsschalter in der anderen Drehrichtung zu früh geschaltet, so dass der Elektromotor schon vor der der Parkstellung benachbarten Umkehrstellung umgepolt bzw. im Intervallbetrieb stillgesetzt wird. Eine Abstimmung des Positionsschalters und des Antriebsteils in der Weise, dass der Postionsschalter in der normalen Drehrichtung des Elektormotors in der der Parkstellung benachbarten Umkehrstellung umgeschaltet wird, führt dazu, dass mit dem gleichen Exzenter wie vorher die Parkstellung nicht erreicht wird. Mit einem grösseren Exzenter liesse sich dann jedoch das Problem lösen. Dieser Weg wurde jedoch in der vorliegenden Erfindung nicht eingeschlagen. Eine allen Anforderungen genügende Funktionsweise der Scheibenwischeranlage wird vielmehr dadurch erzielt, dass der Positionsschalter drehrichtungsunabhängig jeweils in derselben Position des Antriebsteils betätigt wird.

Dies kann in besonders einfacher Weise gemäss Anspruch 2 dadurch realisiert werden, dass das Schaltglied und das Antriebsteil über einen toten Gang miteinander gekoppelt sind. Der tote Gang erstreckt sich über einen Winkel, der den Unterschied zwischen den beiden Positionen ausmacht, in denen bei einer festen Kopplung zwischen Schaltglied und Antriebsteil der Positionsschalter betätigt würde.

Vorteilhafte Ausgestaltungen der mit einem toten Gang versehenen Kopplung zwischen dem Schaltglied und dem Antriebsteil kann man den Unteransprüchen 3 bis 5 entnehmen.

Eine eindeutige Führung und gute Beweglichkeit des Schaltglieds gegenüber dem Antriebsteil ist gewährleistet, wenn das Schaltglied gemäss Anspruch 6 einen Langerabschnitt aufweist, mit dem es gleichachsig mit dem Antriebsteil und innerhalb des toten Ganges gegenüber dem Antriebsteil drehbar gelagert ist. Bevorzugt wird dann eine Ausführung, bei der das Schaltglied unmittelbar am Antriebsteil gelagert ist.

Durch eine Ausbildung nach Anspruch 9 wird der Positionsschalter gleich nach dem Losfahren des Elektromotors vom Schaltglied freigemacht, so dass er in seine Lage, die er während des grössten Teils einer Drehung des Antriebsteils einnimmt, zurückkehren kann. Ein kurzes Antippen des Betriebsschalters genügt deshalb dafür, dass der Wischer kurz über die Scheibe streicht und dann wieder in die Parkstellung gebracht wird.

Gehört zum Positionsschalter ein Hebekontakt, so ist das Schaltglied gemäss Anspruch 10 vorteilhafterweise ein Nocken. Damit der Nocken dann ohne viel Spiel drehbar gelagert werden kann und der Positionsschalter gleich schaltet, wird gemäss Anspruch 11 der Nocken bei einer Umkehrung der Drehrichtung zunächst vom Antriebsteil mitgenommen und erst vom Hebekontakt zurückgehalten. Der Nocken muss nicht unbedingt sehr locker gelagert sein.

Bevorzugt wird gemäss Anspruch 13 eine Ausführung, bei der der Positionsschalter als Wechselschalter ausgebildet ist, dessen Umschaltkontakt in den beiden Schaltstellungen wechselweise mit dem positiven bzw. negativen Pol einer Spannungsquelle verbindbar ist, und der in der Parkstellung und in der der Parkstellung benachbarten Umkehrstellung seine erste, im übrigen aber seine zweite Schaltstellung einnimmt.

Mehrere Ausführungsbeispiele einer erfindungsgemässen Scheibenwischanlage sind in den Zeichnungen dargestellt. Anhand der Figuren dieser Zeichnungen soll die Erfindung nun näher erläutert werden.

Es zeigen:

Fig. 1 die elektrische Schaltanordnung einer erfindungsgemässen Scheibenwischanlage,

Fig. 2 einen Schnitt durch das Getriebegehäuse des zur Scheibenwischanlage gehörenden Elektromotors,

Fig. 3 eine Sicht in das Getriebegäuse nach Stillstand des Elektromotors in der einen Drehrichtung,

Fig. 4 eine Sicht in das Getriebeghäuse nach Stillstand des Elektromotors in der anderen Drehrichtung,

Fig. 5 und 6 ein Schaltglied und ein Antriebsteil, die durch einen radialen Vorsprung miteinander gekoppelt sind, und

Fig. 7 eine weitere Variante der Art der Kopplung zwischen Schaltglied und Antriebsteil.

In der Zeichnung ist mit 10 die Baueinheit eines Elektromotors 11 mit Permanentmagneten bezeichnet, der zum Antrieb wenigstens eines Wischers dient. Der Elektromotor wird über die Anschlüsse 12 und 13 gespeist. Ihm ist ein Positionsschalter 14 zugeordnet, der als Wechselschalter ausgebildet ist. Der bewegliche Kontakt 15 des Positionsschalters 14 ist dauernd mit dem Anschluss 16 der Baueinheit 10 verbunden. Er liegt wechselweise entweder auf dem ebenfalls zur Baueinheit 10 gehörenden Anschluss 17, der über eine Leitung 18 und einen Ausgang 19 eines Zündschalters mit dem positiven Pol einer nicht näher dargestellten Spannungsquelle verbunden ist, oder auf dem Anschluss 20 auf, der mit dem negativen Pol 21 der Spannungsquelle verbunden ist. Vom Anschluss 16 der Baueinheit 10 führt eine Leitung 22 zu einem Anschluss 23 eines in seine Gesamtheit mit 24 bezeichneten Steuergeräts.

Zu der Scheibenwischanlage gehört ein Betriebsschalter 30, der drei verschiedene Schaltstellungen einnehmen und von Hand betätigt werden kann. Der Betriebsschalter 30 besitzt insgesamt vier Aussenanschlüsse 31, 32, 33 und 34. Der Aussenanschluss 31 ist mit dem Ausgang 19 des Zündschalters verbunden. Vom Anschluss 32 führt eine Leitung 35 zu einem Anschluss 36 des Steuergeräts 24. Der Anschluss 33 des Betriebsschalters 30 ist mit dem Anschluss 12 des Elektromotors 11 und mit einem Eingang 37 des Steuergeräts 24, der Anschluss 34 des Betriebsschalters 30 mit einem Anschluss 38 des Steuergerätes 24 verbunden.

Der Betriebsschalter 30 hat drei Kontaktbrücken 45, 46 und 47, die beim Umschalten des Betriebsschalters 30 aus einer mittleren Nullstellung in eine Dauerwischbetriebsstellung und eine Intervallwischbetriebsstellung bewegt werden. In der Nullstellung und in der Intervallbetriebsstellung verbindet die Kontaktbrücke 46 die beiden Anschlüsse 32 und 33 miteinander. In der Dauerbetriebsstellung wird dem Anschluss 33 über die Kontaktbrücke 47 vom Anschluss 31 her Pluspotential zugeführt. In der Intervallbetriebsstellung schliesslich führt die Kontaktbrücke 45 dem Anschluss 34 vom Anschluss 31 her Pluspontential zu.

Zu den schon erwähnten Anschlüssen 23, 36, 37 und 38 besitzt das Steuergerät 24 vier weiter Anschlüsse 48, 49, 50 und 51, von denen der Anschluss 48 über die Leitung 18 mit dem Ausgang 19 des Zündschalters, der Anschluss 49 mit dem Minuspol 21, der Anschluss 50 über eine Leitung 52 mit dem Anschluss 13 des Elektromotors 11 und der Anschluss 51 über eine Leitung 53 direkt mit dem Pluspol 54 der Spannungsquelle verbunden ist.

Das Steuergerät enthält neben einer elektronischen Baueinheit 60 drei Relais 61, 62 und 63, deren Spulen auf der einen Seite an den Anschluss 48 und auf der anderen Seite an die Baueinheit 60 angeschlossen sind. Zu allen Relais gehört ein beweglicher Kontakt 64, 65 bzw. 66. Der Kontakt 66 wechselt zwischen den Anschlüssen 23 und 48 des Steuergeräts 24. Der Kontakt 65 wechselt zwischen einer Verbindung mit dem Kontakt 66 des Relais 63 und dem Anschluss 49 und ist dauernd mit dem Anschluss 36 verbunden. Der Kontakt 64 des Relais 61 schliesslich wechselt zwischen dem Anschluss 48 und dem Anschluss 49. Die beiden Relais 61 und 62 gehören zusammen und bilden zusammen mit ihren beweglichen Kontakten 64 und 64 einen Umpolschalter. Das Relais 63 ist das sogenannte Intervallrelais.

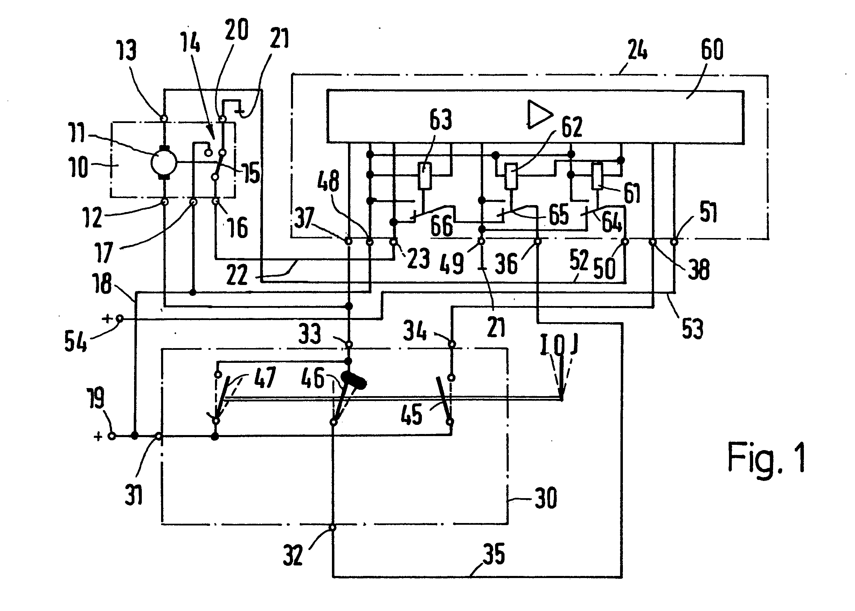

Im folgenden wird nun die Wirkungsweise der in Fig. 1 gezeigten Schaltung beschrieben, wobei davon ausgegangen ist, dass sich der vom Elektromotor 11 angetriebene Wischer in der versenkten Parkstellung befindet und die einzelnen Schalter die in der Zeichnung dargestellten Schaltstellungen einnehmen. Der Elektromotor 11 ist dann kurzgeschlossen, da der Anschluss 13 über die Leitung 52, den Anschluss 50 des Steuergeräts 24, den Kontakt 64 des Relais 61 und den Anschluss 49 des Steuergeräts 24, und auch der Anschluss 12 des Eletromotors 11 über den Anschluss 33, die Kontakbrücke 46 und den Anschluss 32 des Betriebsschalters 30 sowie über die Leitung 35, den Anschluss 36 des Steuergeräts 24, den Kontakt 65 des Relais 62, den Kontakt 66 des Relais 63, den Anschluss 23 des Steuergeräts 24, die Leitung 22, den Anschluss 16 der Baueinheit 10, den beweglichen Kontakt 15 des Positionsschalters 14 und den Anschluss 20 der Baueinheit 10 mit dem negativen Pol der Spannungsquelle verbunden ist. Alle Relais sind entregt.

Wird nun der Betriebsschalter 30 in die Dauerbetriebsstellung gebracht, wird zunächst der Motorkurzschlussstromkreis über die Kontaktbrücke 46 unterbrochen. Über die Kontaktbrücke 47, die mit dem auf Pluspotential liegenden Anschluss 19 des Zündschalters verbunden ist, wird dem Anschluss 12 des Motors und dem Anschluss 37 der Steuereinheit 24 Pluspotential zugeführt. Pluspotential am Anschluss 37 bedeutet, dass unabhängig von der Schaltstellung des Positionsschalters 14 zunächst keines der im Steuergerät vorhandenen Relais erregt werden kann. Der Anschluss 13 des Motors bleibt somit auf Masse. Der Motor läuft damit in einer bestimmten Drehrichtung, beispielsweise entgegengesetzt dem Uhrzeigersinn an und bewegt die oder den Wischer zwischen der der Parkstellung benachbarten Umkehrstellung und einer zweiten Umkehrstellung über die Scheibe eines Kraftfahrzeuges. Wie anhand der weiteren Figuren noch näher erläutert werden wird, wechselt der bewegliche Kontakt des Positionsschalters 14 kurz nach dem Verlassen der Parkstellung vom Anschluss 20 auf den Anschluss 17 der Baueinheit 10 und wird jeweils nur in der ersten Umkehrstellung des Wischers kurz auf den Anschluss 20 umgelegt.

Wird nun zum Ausschalten der Wischanlage der Betriebsschalter 30 wieder in die dargestellte Lage gebracht, so bleibt zunächst der Anschluss 12 des Elektromotors 11 über die Kontaktbrücke 46 des Betriebsschalters 30, das Steuergerät 24 und den Positionsschalter 14 weiterhin auf positivem Potential. Denn während des normalen Wischbetriebes liegt der bewegliche Kontakt 15 des Positionsschalters 14 über den Anschluss 17 auf positivem Potential, so lang sich der Wischer nicht in seiner der Parkstellung benachbarten Umkehrstellung befindet. Erreicht der Wischer nun seine der Parkstellung benachbarte erste Umkehrstellung, dann wechseln der bewegliche Kontakt 15 des Positionsschalters 14 und der Anschluss 23 des Steuergeräts 24 auf negatives Potential. Dadurch wird zunächst wieder ein Kurzschlussstromkreis für den Motor 11 über die Kontaktbrücke 46 des Betriebsschalters 30 geschlossen. Zusätzlich werden nun die beiden Relais 61 und 62 erregt. Dies ändert nichts am Potential des Anschlusses 12 des Motors 11. Der Wechsel des Kontakts 65 des Relais 62 ist jedoch notwendig, um den Anschluss 12 auf negativem Potential zu halten, wenn der Kontakt 15 des Parkstellungsschalters 14 nach dem Verlassen der ersten Umkehrstellung wieder auf positivem Potential liegt. Der Anschluss 13 des Elektromotors 11 wird über den Kontakt 64 des Relais 61 mit dem Anschluss 19 des Zündschalters verbunden. Der Motor 11 ist also umgepolt und ändert, ausgehend von der ersten Umkehrstellung des Wischers, seine, Drehrichtung. Der Motor läuft nun in dieser anderen Drehrichtung so lange, bis in der versenkten Parkstellung des Wischers der Kontakt 15 des Positionsschalters 14 wieder vom Anschluss 17 auf den Anschluss 20 der Baueinheit wechselt. Massepotential wird über den Anschluss 23 in die Steuereinheit 24 gegeben, deren beide Relais 61 und 62 abfallen und den Motor 11 kurzschliessen.

Wird der Betriebsschalter 30 in die Intervallbetriebsstellung gebracht, so bleibt der Anschluss 13 des Elektromotors 11 über den Kontakt 64 des Relais 61 mit Masse verbunden. Das Relais 63 zieht an, so dass der Anschluss 12 des Elekromotors 11 über die Kontaktbrücke 46 des Betriebsschalters 30, den Kontakt 65 des Relais 62 und den Kontakt 66 des Relais 63 mit dem Anschluss 19 des Zündschalters verbunden wird. Der Motor läuft somit entgegen dem Uhrzeigersinn an. Nach einem Wischzyklus trifft in der ersten Umkehrstellung der Kontakt 15 des Positionsschalters 14, der zwischenzeitlich mit dem Anschluss 17 verbunden war, wieder auf den Anschluss 20 der Baueinheit 10. Das Relais 63 fällt deshalb für eine bestimmte Zeit, die Pausenzeit des Intervallwischens, ab und schliesst den Motor 11 kurz. Nach der Pausenzeit zieht das Relais wieder an und fällt nach einem Wischzyklus in der ersten Umkehrstellung des Wischers wieder ab. Wird dann irgendwann zum Ausschalten des Intervallbetriebs der Wischanlage der Betriebsschalter wieder in die dargestellte Lage gebracht, wird der Motor 11 in der ersten Umkehrstellung umgepolt, dreht dann während eines Wischzyklus in die andere Richtung und legt den Wischer in der versenkten Parkstellung ab.

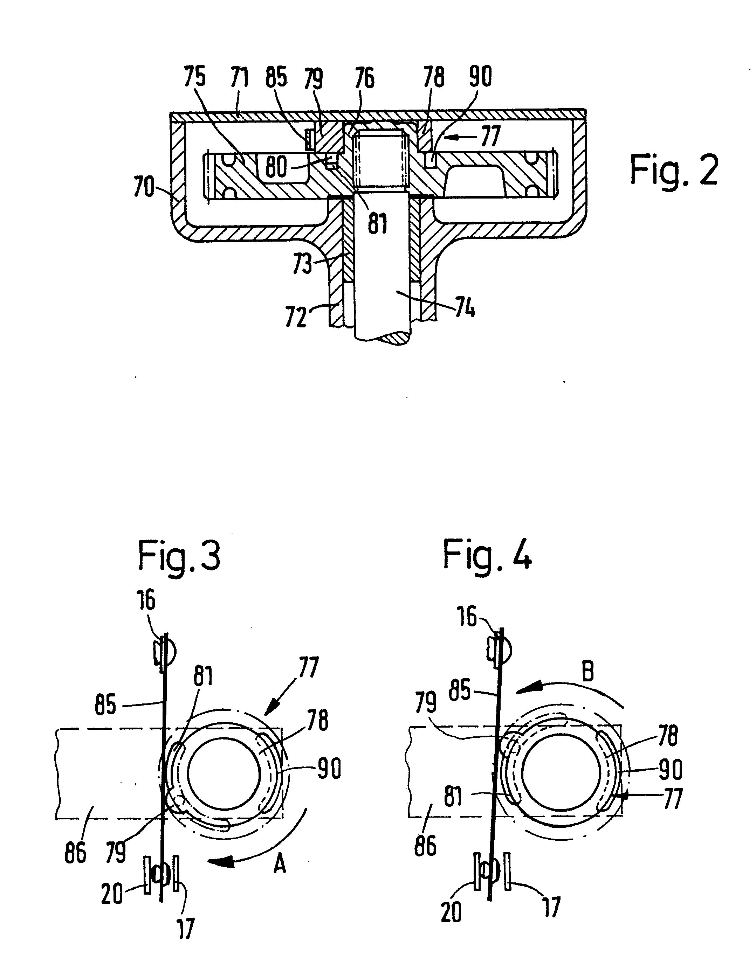

Zur Scheibenwischanlage gehört ein rundlaufendes Antriebsteil, das in der Parkstellung und in der ersten Umkehrstellung des Wischers jeweils dieselbe Lage einnimmt. Entscheidend dafür, dass der Motor jeweils in der ersten Umkehrstellung umgepolt wird und der Wischer während der Pausenzeit des Intervallbetriebs in der ersten Umkehrstellung abgelegt ist, ist nun, dass der Positionsschalter 14 unabhängig von der Drehrichtung des Elekromotors jeweils in derselben Position des Antriebsteils umgeschaltet wird. Wie dies sichergestellt werden kann, ist näher in den Fig. 2 bis 7 erläutert.

Unmittelbar zum Elektromotor 11 gehört ein topfförmiges Getriebengehäuse 70, das durch einen Deckel 71 verschlossen ist und in seinem Boden ein Lagerauge 72 besitzt, in dem über Lagerbuchsen 73 eine Kurbelwelle 74 drehbar gelagert ist. Innerhalb des Getriebegehäuses 70 sitzt drehfest auf der Kurbelwelle 74 das Schneckenrad 75, das von der Schneckenwelle des Motors 11 angetrieben wird und das rundlaufende Antriebsteil bildet. Auf der axial verlängerten Nabe des Schneckenrads 75 ist das Schaltglied 77 drehbar gegenüber dem Schneckenrad 75 gelagert. Das Schaltglied ist ein Nocken mit einem auf der Nabe 76 der Schneckenrads 75 gelagerten Ring 78, mit einem an einer Stelle von diesem Ring radial vorspringenden Ansatz 79 und einem im Bereich des Ansatzes 79 angeformten Mitnahmezapfen 80, der axial in eine sich über ein bestimmtes Winkelsegment erstreckende Nut 81 des Schneckenrades 75 eingreift. Die Nut 81 ist wesentlich länger als der Durchmesser des Zapfens 80, so dass das Schneckenrad 75 und der Nocken 77 in Drehrichtung mit einem toten Gang miteinander gekoppelt sind.

Tagential zum Nocken 77 erstreckt sich im Getriebegehäuse 70 ein Hebekontakt 85, der an seinem einen Ende an dem isoliert im Deckel 71 festgelegten Anschluss 16 der Baueinheit 10 befestigt ist. Mit seinem anderen Ende befindet sich der Hebekontakt 85 zwischen den beiden ebenfalls isoliert im Deckel 71 festgelegten Anschlüssen 17 und 20 der Baueinheit 10. Der Hebekontakt 85 ist so vorgespannt, dass er normalerweise gegen den Anschluss 17 drückt.

Die Fig. 3 zeigt die Lage des Nockens 77 und der Nut 81 des Schneckenrads 75, wenn der Motor nach einer Drehung in Richtung des Pfeiles A, also im Uhrzeigersinn, stillgelegt ist. Dies ist in der versenkten Parkstellung der Fall. Fig. 4 zeigt die entsprechenden Teile bei einer Stillegung des Motors nach einer Drehung entgegengesetzt dem Uhrzeigersinn. Dies ist z.B. im Intervallbetrieb nach jedem Zwischenzyklus der Fall.

Ausgehend von der Darstellung nach Fig. 3 sei nun angenommen, dass die Scheibenwischanlage für den Dauerbetrieb eingeschaltet wird. Das Schneckenrad 75 dreht sich dann entgegen der Richtung des Pfeiles A in Richtung des Pfeiles B aus Fig. 4. Der Kraftschluss zwischen dem Nocken 77 und dem Schneckenrad 75 ist so gross, dass der Nocken 77 vom Schneckenrad sofort mitgenommen wird. Er entfernt sich deshalb vom Hebekontakt 85, der gleich zu Beginn der Drehung vom Anschluss 20 auf den Anschluss 17 wechselt. Nach einer Drehung von etwa 300 Grad trifft der Ansatz 79 des Nockens 77 wieder auf den Hebekontakt 85. Dieser ist jedoch gegen den Anschluss 17 vorgespannt und hält den Ansatz 79 fest, bis der Mitnahmezapfen 80 sich vom einem zum anderen Ende der Nut 81 bewegt hat und dann vom Schneckenrad mitgenommen wird. Jetzt drückt der Ansatz 79 den Hebekontakt 85 vom Anschluss 17 weg auf den Anschluss 20. Diese Konfiguration ist in Fig. 4 dargestellt. Solange der Betriebsschalter in der Dauerbetriebsstellung ist, bleibt der Wechsel des Hebekontakts 85 ohne Wirkung. Im Intervallbetrieb dagegen würde der Elektromotor stillgesetzt. Ist mittlerweile der Betriebsschalter in die Nullstellung gebracht worden, so würde der Elektromotor umgepolt werden.

Nach der Umpolung dreht sich das Schneckenrad in Richtung des Pfeiles A. Es nimmt zunächst den Nocken 77 durch Kraftschluss wieder soweit mit, bis dieser gegen den Hebekontakt 85 stösst. Dieser hält den Nocken 77 so lange, bis der Mitnahmezapfen 80 wieder zum andere Ende der Nut 81 gewechselt ist und nun vom Schneckenrad 75 mitgenommen wird. Der Ansatz 79 des Nockens 77 drückt dann den Hebekontakt 85 vom Anschluss 17 weg zum Anschluss 20. Wie man anhand der Lage der Nut 81 sowie der Kurbel 86 bezüglich den festen Anschlüssen 16, 17 und 20 ersehen kann, nehmen die Nut 81, mit ihr das Schneckenrad 75 und die Kurbel 86 nach einem Stillstand des Elektromotors unabhängig von der vorausgegangen Drehrichtung dieselbe Winkellage ein. Dies wird dadurch gewährleistet, dass wegen des toten Ganges zwischen dem Schneckenrad 75 und dem Nocken 77 der Hebekontakt 85 jeweils in derselben Lage des Schneckenrads 75 auf den Anschluss 20 trifft. Die Position des Schneckenrads 75 und der Kurbel 86 entsprechen dann der ersten Umkehrstellung des Wischers. Dies bedeutet, dass in dieser ersten Umkehrstellung auch der Motor umgepolt wird, bevor er den letzten Wischzyklus zum Einfahren in die versenkte Parkstellung beginnt, und dass während des Intervallbetriebs der Wischer in der Pausenzeit in der ersten Umkehrstellung liegt. Und es bedeutet auch , das in der versenkten Parkstellung Schneckenrad 75 und Kurbel 86 dieselbe Winkellage wie in der ersten Umkehrstellung einnehmen.

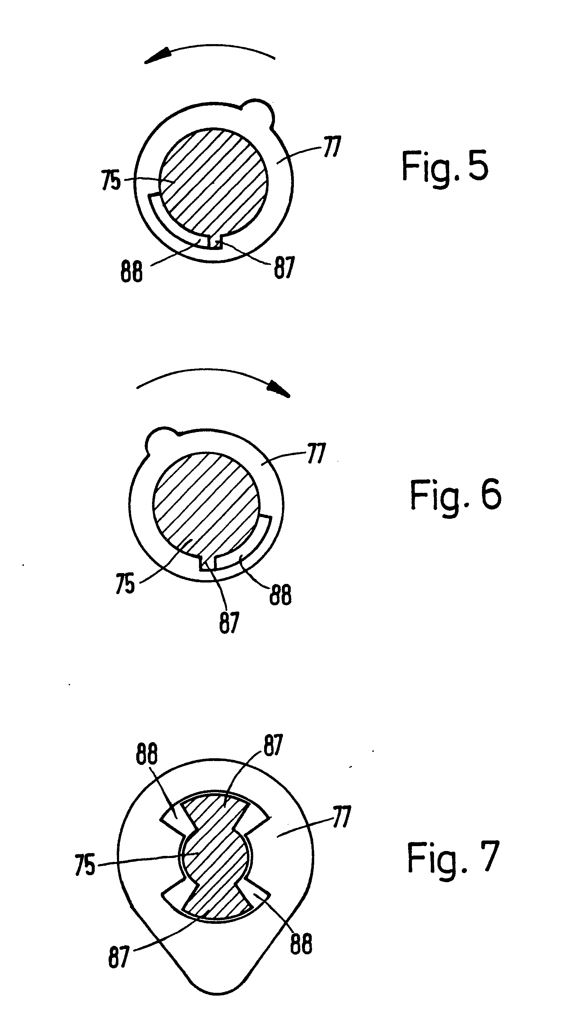

Während in der Ausführung nach den Fig. 2 bis 4 Schneckenrad 75 und Nocken 77 in axialer Richtung miteinander gekoppelt sind, ist dies bei der Ausführung nach den Fig. 5 und 6 in radialer Richtung geschehen. Das Schneckenrad 75 besitzt einen radial vorspringenden Mitnahmezapfen 87, der in eine sich über einen bestimmten Winkelbereich erstreckende Aussparung 88 des Nockens eingreift. Die Fig. 5 zeigt die beiden Teile im Stillstand nach einer Drehrichtung entgegen dem Uhrzeigersinn, die Fig. 6 nach einer Drehung im Uhrzeigersinn. In beiden Fällen nimmt das Schneckenrad 75 wiederum dieselbe Lage ein.

Durch die Ausführung nach Fig. 7 soll darauf hingewiesen werden, dass der Nocken 77 und das Schneckenrad 75 auch mit Hilfe von zwei Ansätzen 87 und zwei Assparungen 88 ineinandergreifen können.

Bezüglich der Fig. 2 bis 4 sei noch darauf hingewiesen, dass das Schneckenrad 75 neben der Nut 81 eine weitere Nut 90 besitzt, die sich in ihrer Länge von der Nut 81 geringfügig unterscheidet. Die Lage der Anschlüsse 16, 17 und 20 sowie die Form und Lage des Hebekontakts 85 weisen Toleranzen auf, so dass der genau notwendige Totgang zwischen dem Schneckenrad 75 und dem Schaltglied 77 von Exemplar zu Exemplar verschieden sein wird. Für die Kopplung zwischen dem Schneckenrad 75 und dem Schaltglied 77 kann man nun die Nut auswählen, die einen Totgang ermöglicht, der dem genau notwendigen Totgang am nächsten kommt. Je nach Wahl der Nut 81 oder 90 muss natürlich auch die relative Lage zwischen dem Schneckenrad 75 und der Kurbel 86 gewählt werden.

Es können auch mehr als zwei Nuten im Schneckenrad vorhanden sein.

## Claims

1. A windshield wiper system, especially for motor vehicles, comprising an electric motor (11) which is supplied from a voltage source and drives at least one wiper which, during normal wiper operation, moves to and fro between two reversing postions within a wiping area and, when the wiper system has been switched off by means of an operating switch (30), is deposited in a concealed parking position outside the wiping area, wherein upon switching on of the wiper system and during normal wiper operation the electric motor (11) runs in one direction of rotation however in the other direction of rotation when the wipers enter the parking postion, and comprising a position switch (14), which may be changed over via a switching member (77) coupled with a rotating drive member (75) of the electric motor (11) and, after the operating switch (30) has been swithed off, gives a signal for reversing the polarity and, in the parking position, a signal for switching off the electric motor (11), characterized in that the position switch (14) may be changed over independently of the direciton of rotation of the electric motor (11) always in the same position of the drive member (75).

2. A windshield wiper system according to claim 1, characterized in that the switching member (77) and the drive member (75) are coupled with each other via a dead travel.

3. A windshield wiper system according to claim 2, characterized in that one of the said two parts (75, 77) coupled with each other engages with a projection (80, 87) in a larger recess (81, 88) of the other part.

4. A windshield wiper system according to claim 3, characterized in that the projection (80) engages in the recess (81) in the axial direction of the drive membre (75).

5. A windshield wiper system according to claim 3, characterized in that the projection (87) engages in the recess (88) radially to the axis of the drive member (75).

6. A windshield wiper system according to any one of claims 2 to 5, characterized in that the switching member (77) has a bearing portion preferably a ring (78) by means of which it is mounted in an equiaxed manner with the drive member (75) and, within the dead travel, it is rotatably mounted relative to the drive member (75).

7. A windshield wiper system according to claim 6, characterized in that the switching member (77) is directly mounted on the drive member (75).

8. A windshield wiper system according to any one of claims 1 to 7, characterized in that one wheel of a gearing pertaining to the electric motor (11), especially the worm wheel (75) of a worm gear, is the drive member.

9. A windshield wiper system according to any one of claims 2 to 8, characterized in that, when the electric motor (11) starts from the parking position the switching member (77) is taken along by the drive member (75) because of a frictional connection, so that the position switch (14) is immediately reset and that before the position switch (14) is operated first the switching member (77) is held fast as far as to the end of the dead travel.

10. A windshield wiper system according to any one of claims 1 to 9, characterized in that a vertical interruptor contact (85) is part of the position switch (14) and that the switching member is a cam (77).

11. A windshield wiper system according to claims 9 and 10, characterized in that, when the direction of rotation is reversed, the cam (77) is at first taken along by the drive member (75) due to a frictional connection and is only retained by the vertical interruptor contact (85).

12. A windshield wiper system according to any one of claims 1 to 11, characterized in that the contacts (17, 20, 85) of the position switch (14) are located at the inside of the cover (71) of the gear housing (70) pertaining to the electric motor (11).

13. A windshield wiper system according to any one of claims 1 to 12, characterized in that the position switch (14) in formed as a two-way switch, the change-over contact (85) of which in the two switching positions in alternately connectable with the positive or negative pole (19, 21) of a voltage source and which in the parking position and in a reversing position adjacent to the parking position occupies its first switching position, but otherwise its second switching position.

14. A windshield wiper system according to any one of claims 2 to 13, characterized in that the switching member (77) and the drive member (75), especially one wheel of a gearing pertaining to the electric motor (11), may be coupled in several relative positions to each other and that the dead travels of the various couplings are different.

15. A windshield wiper system according to claim 14, characterized in that in that one part (75) has several recesses (81, 90) for a projection (80) of the other part (77).


**Revendications**

1. Dispositif d'essuie-glace, en particulier pour des véhicules automobiles et qui comporte un moteur électrique (11) alimenté à partir d'une source de tension pour entraîner au moins un essuie-glace qui, en mode de balayage normal, effectue un déplacement alternatif entre deux positions de renversement de marche à l'intérieur d'un champ de balayage et, après la mise hors circuit du système essuie-glace au moyen d'un commutateur de marche (30), est logé dans une postion d'arrêt fixe escamotée hors du champ de balayage le moteur électrique (11) tournant dans un sens de rotation lors de la mise en circuit du système essuie-glace et en mode de balayage normal, mais dans l'autre sens de rotation pour amener les essuie-glace en position d'arrêt fixe, et comprenant un commutateur de position (14) qui peut être commuté par l'intermédiaire d'un organe de commande (77) relié à un élément d'entraînement rotatif (75) du moteur électrique (11) et qui, lorsque le commutateur de marche (30) est mis hors circuit, fournit un signal d'inversion de polarité et, en position d'arrêt fixe, un signal de mis hors circuit du moteur électrique (11), caractérisé en ce que le commutatuer de position (14) est commutable dans la même position de l'élément d'entraînement (75), indépendamment du sens de rotation du moteur électrique (11).

2. Dispositif d'essuie-glace conforme à la revendication 1, caractérisé en ce que l'organe de commande (77) et l'élément d'entraînement (75) sont reliés l'un à l'autre par l'intermédiaire d'une course à vide.

3. Dispositif d'essuie-glace conforme à la revendication 2, caractérisé en ce qu'une saillie (80, 87) de l'une des deux pièces reliées l'une à l'autre (75, 77) s'engage dans un évidement plus grand (81, 88) de l'autre pièce.

4. Dispositif d'essuie-glace conforme à la revendicaiton 3, caractérisé en ce que la saille (80) s'engage dans l'évidement (81) dans le sens axial de l'élément d'entraînement (75).

5. Dispositif d'essuie-glace conforme à la revendication 3, caractérisé en ce que la saillie (87) s'engage dans l'évidement (88) radialement par rapport à l'axe de l'élément d'entraînement (75).

6. Dispositif d'essuie-glace conforme à l'une quelconque des revendications 2 à 5, caractérisé en ce que l'organe de commande (77) comporte une portion de palier, de préférence un anneau (78), avec lequel elle est montée de manière rotative par rapport à l'élément d'entraînement (75), dans le même axe que ce dernier et à l'intérieur d'une course à vide.

7. Dispositif d'essuie-glace conforme à la revendication 6, caractérisé en ce que l'organe de commande (77) est monté directement sur l'élément d'entraînement (75).

8. Dispositif d'essuie-gace conforme à l'une quelconque des revendications 1 à 7, caractérisé en ce que qu'une roue d'une mécanisme faisant partie du moteur électrique (11), en particulier la roue à vis sans fin (75) d'un mécanisme à vis sans fin, est l'élément d'entraînement.

9. Dispositif d'essuie-glace conforme à l'une quelconque des revendications 2 à 8, caractérisé en ce que, lorsque le moteur électrique (11) quitte la position d'arrêt fixe, l'organe de commande (77) est entraîné par adhérence par l'élément d'entraînement (75), de sorte que le commutateur de positionnement (14) est immédiatement remis, et en ce que, avant le premier actionnement du commutateur de positionnement (14), l'élément de commande (77) est immobilisé jusqu'à la fin de la course à vide.

10. Dispositif d'essuie-glace conforme à l'une quelconque des revendications 1 à 9, caractérisé en ce que le commutateur de positionnement (14) comporte un contact à levage (85) et l'organe de commande est une came (77).

11. Dispositif d'essuie-glace conforme aux revendications 9 et 10, caractérisé en ce qu'en cas d'inversion du sens de rotation, la came est, dans un premier temps, entraînée par adhérence par l'élément d'entraînement (75) et est maintenue par le contact de levage.

12. Dispositif d'essuie-glace conforme à l'une quelconques des revedications 1 à 11, caractérisé en ce que les contacts (17, 20, 85) du commutateur de positionnement (14) se trouvent sur le côté intérieur du couvercle (71) du carter (70) faisant partie du moteur électrique (11).

13. Dispositif d'essuie-glace conforme à l'une quelconque des revendications 1 à 12, caractérisé en ce que le commutateur de positionnement (14) est conçu sous la forme d'une commutateur inverseur dont le contact de commutation (85) dans les deux positions de commutation peut être alternativement relié au pôle positif ou, respectivemetn, négatif (19, 21) d'une source de tension, et qui, en position d'arrêt fixe et en position de renversement de marche voisine de la position d'arrêt fixe, adopte sa première, mais aussi sa seconde position de commutation.

14. Dispositif d'essuie-glace conforme à l'une quelconque des revendications 2 à 13, caractérisé en ce que l'organe de commande (77) et l'élément d'entraînement (75), en particulier une roue d'un mécanisme faisant partie du moteur électrique (11), peuvent être reliés l'un à l'autre dans plusierus positions relatives, et en ce que les courses à vide des diverses liaisons sont différentes.

15. Dispositif d'essuie-glace conforme à la revendication 14, caractérisé en ce que l'une des pièces (75) comporte plusieurs évidements (81, 90) distinés à une saillie (80) de l'autre pièce (77).

Fig. 1

Fig. 2

Fig. 3

Fig. 4

Fig. 5

Fig. 6

Fig. 7